**Europäisches Patentamt**

**European Patent Office**

**Office européen des brevets**

(11) Veröffentlichungsnummer: **0 203 305**
**A2**

## (12) EUROPÄISCHE PATENTANMELDUNG

(21) Anmeldenummer: **86104131.7**

(22) Anmeldetag: **25.03.86**

(51) Int. Cl.⁴: **G 11 B 15/675**

(30) Priorität: **24.05.85 DE 3518786**

(43) Veröffentlichungstag der Anmeldung: **03.12.86**
**Patentblatt 86/49**

(84) Benannte Vertragsstaaten: **CH DE FR GB IT LI**

(71) Anmelder: **GRUNDIG E.M.V. Elektro-Mechanische Versuchsanstalt Max Grundig holländ. Stiftung & Co. KG., Kurgartenstrasse 37, D-8510 Fürth (DE)**

(72) Erfinder: **Krüger, Wolfgang, Dipl.-Ing.(FH), Grossgeschaidt 302, D-8501 Heroldsberg (DE)**

(54) Vorrichtung zum Sperren eines Steuergetriebes.

(57) Es wird eine Vorrichtung zum Sperren eines Kassetten-Einzugsmechanismus für ein Video-Magnetbandgerät beschrieben, wobei ein für den Einzugsmechanismus vorgesehenes Steuergetriebe im wesentlichen aus einer Zahnstange, einem Zahnritzel und aus einem Schwenkhebel besteht. Das Steuergetriebe wird in der Endstellung des Kassetten-Einzugsmechanismus dadurch gesperrt, daß ein abgeschrägter Führungssteg am Ende der Zahnstange unter eine Abflachung am Zahnritzel anläuft und hierbei das Zahnritzel außer Eingriff kommt. Die Aufhebung der Sperrung erfolgt durch Drehrichtungsänderung des Antriebsmotors für das Steuergetriebe.

1

# VORRICHTUNG ZUM SPERREN EINES STEUERGETRIEBES

## BESCHREIBUNG

Es sind Kassetten-Einzugsmechanismen für Video-Magnetbandgeräte bekannt, die über ein Steuergetriebe das einen Kassettenschlitten betätigt, die Kassette in einen Aufnahmeschacht in das Geräte-Innere absenken oder aus diesem herausheben. Erforderlich ist hierfür, daß der Kassettenschlitten in seinen beiden Funktionslagen in einer genau definierten Position verriegelt wird. Insbesondere in der abgesenkten Lage des Schlittens in das Geräte-Innere ist eine Sperrvorrichtung unverzichtbar, da die Kassette entgegen innerer Federkräfte auf die Spulen-Antriebsdorne aufgedrückt und in dieser Lage gehalten werden muß. Nachteilig ist, daß die hierfür bekannten Sperreinrichtungen aufwendig sind und insbesondere zur Aufhebung der Sperre

**2**

einen zusätzlichen Steuervorgang für das Entriegeln erforderlich machen.

Aufgabe der Erfindung ist es daher diese Nachteile zu beseitigen, und eine Vorrichtung zum Sperren eines Steuergetriebes für einen Kassettenschlitten zu schaffen, die es ermöglicht, daß ohne zusätzlichen Teileaufwand und ohne zusätzliche Vorrichtung zum Aufheben der Sperre die Kassette in den Endstellungen mittels des Kassettenschlittens im Inneren des Gerätes gehalten wird, und die Sperre zwangsläufig durch Drehrichtungsänderung des Steuergetriebes aufgehoben wird.

Diese Aufgabe wird erfindungsgemäß durch die im Kennzeichen des Patentanspruchs 1 angegebenen Merkmale gelöst.

Die Erfindung wird nachfolgend anhand der Zeichnungen näher erläutert.

Fig. 1   ist eine vereinfachte perspektivische Teildarstellung eines Videorecorders mit einer Schlitzöffnung zum Einführen einer Kassette und einem Steuergetriebe mit Sperrvorrichtung zum Antrieb eines Kassettenschlittens,

Fig. 2    ist eine schematische Draufsicht auf
          einen Teil eines Steuergetriebes mit
          Sperrvorrichtung zum Antrieb des Kassettenschlittens,und

Fig. 3    ist eine Draufsicht auf einen Teil
          eines Steuergetriebes mit Sperrvorrichtung ähnlich der Fig. 1, jedoch
          in veränderter Lage der Getriebeteile.

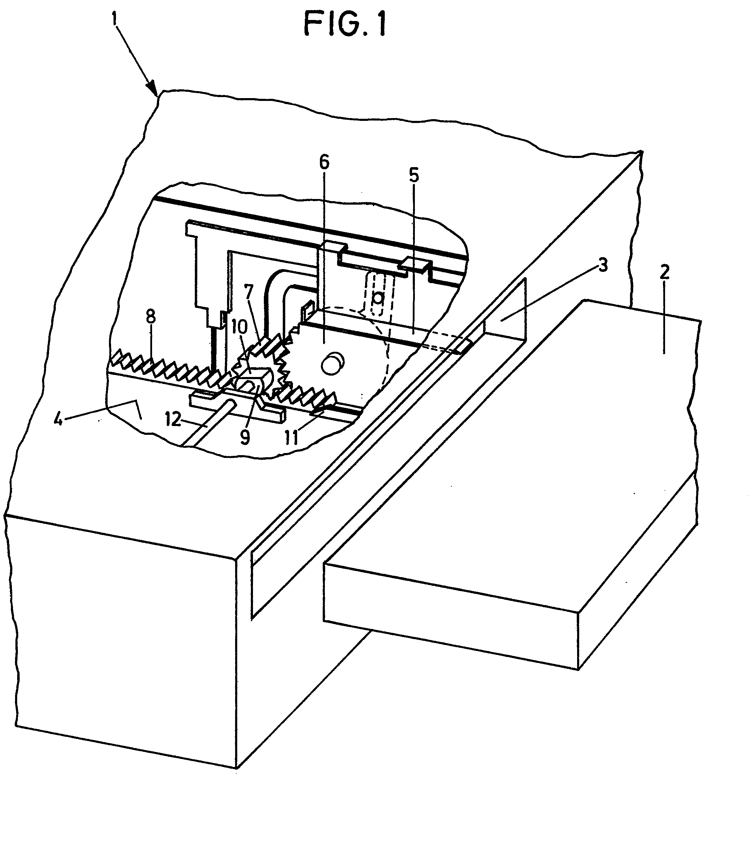

In der Figur 1 ist ein Video-Magnetbandgerät 1 in
einer Teilansicht dargestellt, in der eine Bandkassette 2 über eine schlitzförmige Öffnung 3 in das
Innere eines Gerätes eingeführt werden kann. Die
Kassette wird nach dem Einschieben in die Geräte-
öffnung in einen Aufnahmeschacht 4 mittels eines
Kassettenschlittens 5 in das Geräte-Innere abgesenkt
oder herausgeführt. Der Kassettenschlitten 5 wird
hierbei von einem Steuergetriebe angetrieben, wobei
das Getriebe im wesentlichen aus einem Schwenkhebel 6
mit einem Zahnkranzsegment, einem Zahnritzel, und
einer Zahnstange  sowie einem nicht näher dargestellten Antriebsmotor besteht. Die Zahnstange 8 greift
hierbei in das Zahnritzel 7 ein und dieses ist gleichzeitig in ständigem Eingriff zu dem Schwenkhebel 6.
Über eine Verbindungswelle 12 und einem nicht dargestellten Ritzel wird der Antrieb des Kassettenschlittens von einer Seite des Kassetten-Aufnahmeschachtes

4

auf die andere Seite übertragen, da die Kassette an
beiden Schmalseiten von je einem Kassettenschlitten
erfaßt und gehalten wird. Das Zahnritzel 7 ist mit
einem zylindrischen Flansch 9 versehen, der zwei
gegenüberliegende Abflachungen 10 aufweist. An der
Zahnstange 8 ist an einem Verzahnungsende seitlich
ein Führungssteg 11 angebracht, der in Eingriff zu
dem zylindrischen Flansch 9 des Zahnritzels 7 gelangt.
Wird der Kassettenschlitten mit eingelegter Kassette
in den Aufnahmeschacht 4 abgesenkt, so treibt hierbei
die Zahnstange 8 das Ritzel 7 und dieses den Schwenkhebel 6 an. Sobald der abgeschrägte Führungssteg 11
der Zahnstange 8 den zylindrischen Flansch des Zahnritzels 7 erreicht, gleitet der Führungssteg 11 unter
die Abflachung 10 des Zahnritzels und sperrt dieses.
Da etwa kurz nach Beginn der Abschrägung am Führungssteg der Zahnstange die Verzahnung aufhört, kann die
Zahnstange mit dem zugeordneten Führungssteg gänzlich
unter den abgeflachten Flansch des Zahnritzels geschoben werden.Das Steuergetriebe zum Antrieb des
Kassettenschlittens ist somit verriegelt und der
Schlitten kann nicht aus seiner Lage gedrückt werden.
Durch Drehrichtungsänderung des Antriebsmotors wird
die Sperre aufgehoben, wobei die Abschrägung des
Führungssteges an der Zahnstange so gewählt ist, daß
ein sicherer Eingriff der Ritzelverzahnung in die
Verzahnung der Zahnstange gewährleistet ist.

5

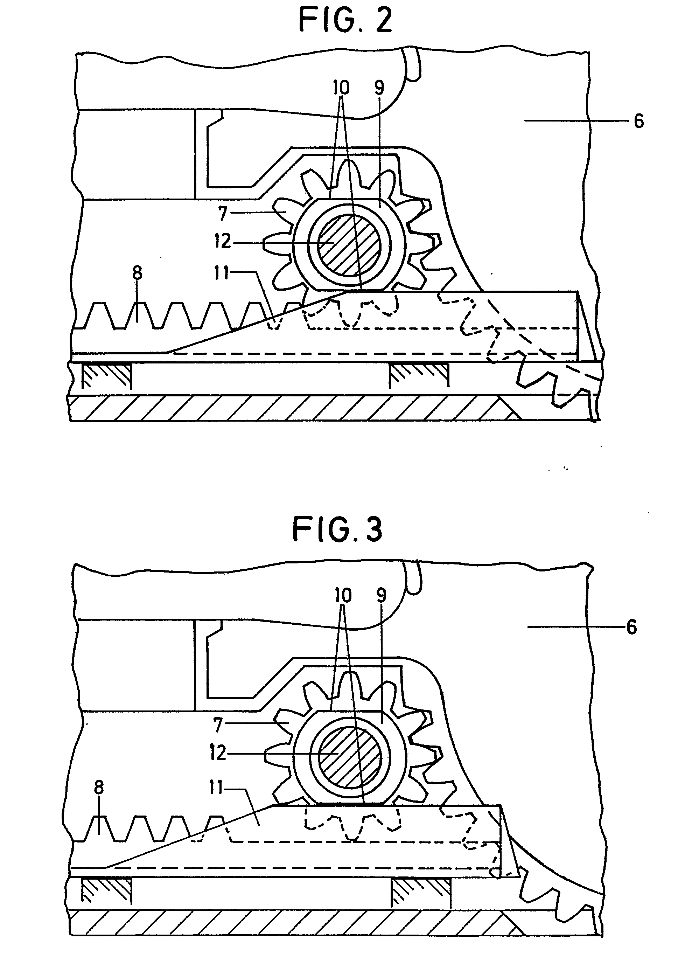

Die Figur 2 und 3 zeigt das Untergleiten des Führungssteges 11 der Zahnstange unter die Abflachung 10, die am zylindrischen Flansch 9 des Zahnritzels 7 angebracht ist.

VORRICHTUNG ZUM SPERREN EINES STEUERGETRIEBES

PATENTANSPRÜCHE

1. Vorrichtung zum Sperren eines Steuergetriebes, das dem Antrieb eines Kassettenschlittens in einem Video-Magnetbandgerät dient, wobei die Kassette mittels des Schlittens in einen Aufnahmeschacht ins Geräte-Innere abgesenkt oder aus diesem herausgeführt wird, und daß in den Kassettenschlitten ein Schwenkhebel eingreift, der über ein ständig in Eingriff stehendes Zahnritzel und über eine Zahnstange angetrieben wird, d a d u r c h   g e k e n n z e i c h n e t ,   daß das Zahnritzel (7) seitlich einen zylindrischen Flansch (9) mit wenigstens einer Abflachung (10) aufweist, daß die Zahnstange (8) an einem Verzahnungsende seitlich einen abgeschrägten Führungssteg (11) aufweist, und daß der abgeschrägte Führungssteg (11) der Zahnstange derart an die Abflachung (10) am zylindrischen Flansch des Zahnritzels anläuft, daß das Ritzel in einer bestimmten Lage gegenüber der Zahn-

2

stange außer Eingriff kommt und in dieser Lage gesperrt ist.

2. Vorrichtung nach Anspruch 1, d a d u r c h g e k e n n z e i c h n e t , daß die Zahnstange (8) über einen Steuermotor antreibbar ist, wobei die Bewegungsrichtung der Zahnstange durch Drehrichtungsänderung des Antriebsmotors umkehrbar ist.

3. Vorrichtung nach Anspruch 1 und 2, d a - d u r c h g e k e n n z e i c h n e t , daß vorzugsweise zwei gegenüberliegende Abflachungen (10) am zylindrischen Flansch (8) des Zahnritzels (7) angeordnet sind.

112

# FIG.1

# FIG. 2

# FIG. 3